# EUROPEAN PATENT APPLICATION

(11) **EP 1 710 480 A2**
(43) Date of publication of application: **11.10.2006**
(21) Application number: 06075832.3
(22) Date of filing: 30.03.2006
(51) Int. Cl.: F16K 31/53, F16K 31/524, E03C 1/042

(54) **Mixer tap**

(30) Priority: 04.04.2005 GB 0506714
(71) Applicant: Swadling Brassware Limited, Churchward Road, Yate Bristol, BS37 5PL (GB)
(72) Inventor: Swadling, Jeremy Philip, Finchdean, Hampshire PO8 0BA (GB)
(74) Representative: Brooks, Nigel Samuel

(57) **Abstract**

A thermostatic mixer valve includes a body having a central cavity, inlets for hot and cold water, and an mixer water outlet. The mixer valve also includes a cartridge housed in the body to control the mixed water. Actuation of the valve is by rotary movement of a temperature control knob. Drive means is provided for converting this rotary movement of the temperature control knob to axial movement transverse to the rotary axis of a thermostatic element. The drive means is adapted to be operated by two controls, one on one side of the body and the other on the other.

## Description

The present invention relates to a thermostatic mixing valve, particularly though not exclusively for use in a domestic shower.

Present mixer valves for domestic use tend to be rather bulky items, and require a substantial space, both vertically and horizontally for fitting. For concealed mixer valve units, this requires either a significant aperture in the wall in which they are to be fixed, or a false wall with a significant gap to the main wall, for fitting of the mixer tap For exposed mixer valve units, a bulky valve can be unsightly and awkward to use.

One of the problems is that the control knobs for the valve are positioned at the end of the valve, resulting in a particularly long or deep valve. This causes difficulties in the fitting as described above.

The object of the present invention is to provide an improved thermostatic mixing valve.

According to the invention there is provided a thermostatic mixing valve comprising:
• a body having
   • a central cavity,
   • two inlets; and
   • an outlet; and
• at least one cartridge housed in the body and
• drive means for converting rotary movement of a temperature control to axial movement transverse to the rotary axis of a thermostatic element
wherein the drive means is adapted to be operated by two controls, one on one side of the body and the other on the other.

The cartridge may be any cartridge for such a thermostatic mixing valve. For examples the cartridge described in GB 2385408 and GB2399159 arc suitable cartridges.

Various gear arrangements can be envisaged as drive means, typically the gear arrangement will be a rack and pinion arrangement, or bevel gears depending upon the design of the body and cartridge. Alternatively, the drive means can be provided in the form of a cam surface.

Where the cartridge provides for both flow control and temperature control, two drive means may be provided on the cartridge. These may be both gears, both cam surfaces or one of each. Alternatively, where separate cartridges are provided for temperature and flow control, drive means can be provided on each cartridge.

To help understanding of the invention, five specific embodiments thereof will now be described by way of example and with reference to the accompanying drawings, in which:
Figure 1 is a side section view of a thermostatic mixing valve according to a first embodiment of the invention;
Figure 2 is a side section view of a thermostatic mixing valve according to a second embodiment of the invention;
Figure 3 is a side secti on view of a thermostatic mixing valve according to a third embodiment of the invention;
Figure 4 is a top section view of a thermostatic mixing valve according to a forth embodiment of the invention; and
Figure 5 is a top section view of a thermostatic mixing valve according to a fifth embodiment of the invention.

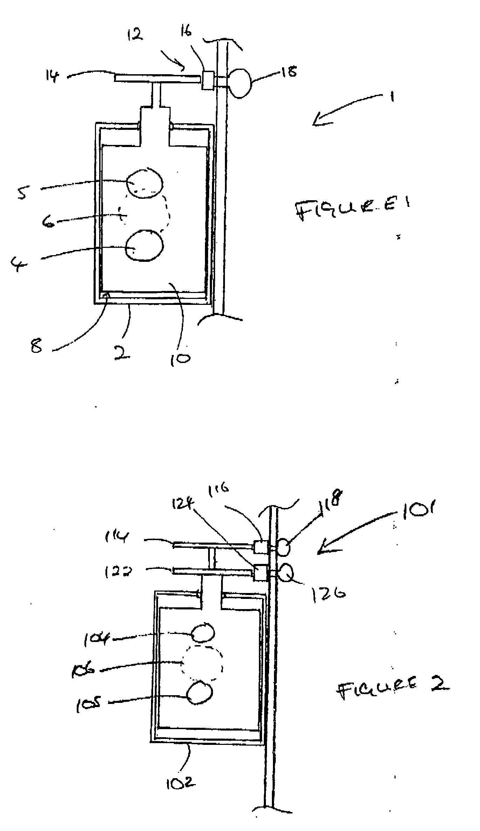

Referring to Figure 1, the valve 1 thereshown comprises a body 2, having a hot water pipe connection 4 and a cold water pipe connection 5. The body is also provided with an outlet connection.

The centre 8 of the body 2 is hollow and houses a cartridge 10. The cartridge can be any cartridge designed for use in a thermostatic mixing valve, for example those described in GB 2385408 and GB2399159 are suitable. The cartridge 10 is sealed into the body using any known method, again for example as described in GB2385408.

The cartridge 10 is designed only to control the water temperature and to activate the temperature control is provided with a gear arrangement 12. As shown the arrangement is a rack and pinion arrangement, although other arrangements could be envisaged. The pinion 14 is attached to the cartridge while the rack 16 is attached to a slider 18 for setting the temperature of the valve.

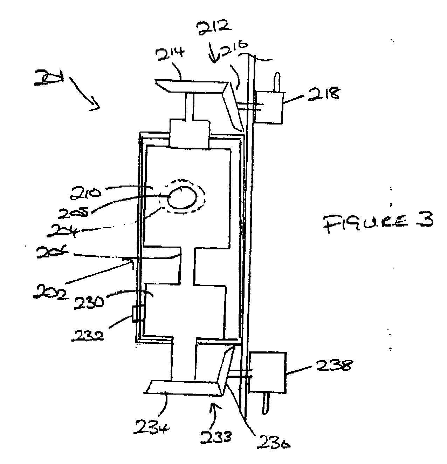

Referring now to Figure 2, the thermostatic mixer valve 101 thereshown is provided with a body 102 housing a cartridge 110. In this embodiment, the cartridge 110 is a dual flow controller and temperature controller. As in the first embodiment, the body is provided with inlets 104 and 105 for hot and cold water, and an outlet 106. As the cartridge control both the water flow and temperature, separate gears 112, 120 are provided to actuate each element. Pinions 114, 122 are provided on the cartridge, with racks 116, 124 attached to sliders 118, 126 for actuation thereof.

The advantage of this invention is that the depth of wall required for holding the mixer is considerably reduced with respect to standard mixer units. This corresponds to the provision of the cartridge in a vertical as opposed to horizontal configuration. As a result the difficulties in fitting of the unit are reduced.

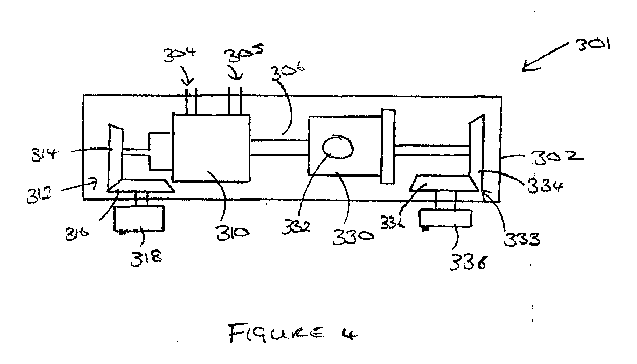

Referring now to Figure 3, the valve 201 thereshown, comprises a body 202 housing two cartridges 210, 230 connected in series. The first cartridge, 210, controls the temperature of the water, and includes inlets for hot 204 and cold 205 water. The outlet 206 flows into the second cartridge 230, which is a flow control cartridge. The outlet 232 of this cartridge is connected to the showed unit, not shown.

The first cartridge 210 is activated by provision of a gear arrangement 212. A first bevel gear 214 is provided on the cartridge, while a second bevel gear 216 is connected through a supporting wall to a control knob 218 for control of the temperature. Similarly, the second cartridge 230 is provided with a gear arrangement 233, including a first bevel gear 234 on the cartridge and a second bevel gear 236 connected through the supporting wall to a control knob 238 for controlling the flow rate.

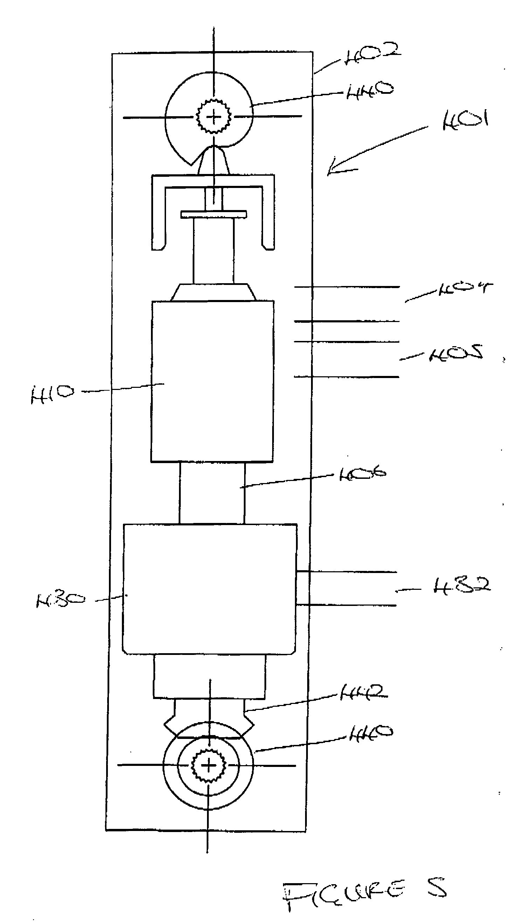

Figure 4 shows an exposed surface mounted thermostatic mixer valve 301 and comprises a body 302 housing two cartridges 310, 330. As in the previous embodiment, the first cartridge, 310, controls the temperature of the water, and includes inlets for hot 304 and cold 305 water. The outlet 306 flows into the second cartridge 330, which is a flow control cartridge. The outlet 332 of this cartridge is connected to the shower unit, not shown.

The first cartridge 310 is activated by provision of a gear arrangement 312. A first bevel gear 314 is provided on the cartridge, while a second bevel gear 316 at right angles to a control knob 318 for control of the temperature. Similarly, the second cartridge 330 is provided with a gear arrangement 333, including a first bevel gear 234 on the cartridge and a second bevel gear 336 connected at right angles to a control knob 238 for controlling the flow rate.

Referring to Figure 5, the thermostatic valve 401 thereshown is similar to the one shown in Figure 4. The valve 401 comprises a body 402 housing two cartridges 410, 430. Cartridge 410 controls the temperature of the water, and includes inlets for hot 404 and cold 405 water. Cartridge 430 controls the flow rate and the outlet 406 from the first cartridge 410 flows into the this cartridge 430. The outlet of this cartridge 432 is then connect to the shower unit, not shown.

The first cartridge is activated by provision of a cam surface 440. Rotation of a control knob, not shown, rotates the cam surface 440, which acts on the cartridge 4 10 to set the temperature of the water. The second cartridge 430 is provided with gears 440 such that rotation of a control knob (not shown) rotates die flow controller 442 set at right angles to it, thus controlling the flow rate.

The invention is not intended to be restricted to the details of the above-described embodiment. For instance, the gearing arrangements can be altered to suit the form and design of the valves. For example, the cartridges of the first two embodiments could be provided with bevel gears, and those of the second two embodiments could be provided with rack and pinion gears. Alternatively cam surfaces could replace the gears in any one of the embodiments.

## Claims

1. A thermostatic mixing valve comprising:
• a body having
• a central cavity,
• two inlets; and
• an outlet; and
• at least one cartridge housed in the body and
• drive means for converting rotary movement of a temperature control to axial movement transverse to the rotary axis of a thermostatic element
wherein the drive means is adapted to be operated by two controls, one on one side of the body and the other on the other.

2. A thermostatic mixing valve as claimed in claim 1, wherein the cartridge may be any cartridge for such a thermostatic mixing valve.

3. A thermostatic mixing valve as claimed in claim 1 or claim 2, the drive means comprises a gear arrangement

4. A thermostatic mixing valve as claimed in claim 3, wherein the gear arrangement is a rack and pinion arrangement,

5. A thermostatic mixing valve as claimed in claim 3, wherein the gear arrangement is bevel gears.

6. A thermostatic mixing valve as claimed in claim 1 or claim 2, wherein the drive means includes a cam surface.

7. A thermostatic mixing valve as claimed in any preceding claim, wherein the cartridge provides for both flow control and temperature control, and two drive means may be provided on the cartridge.

8. A thermostatic mixing valve as claimed in any one of claim 1 to 6, wherein separate cartridges are provided for temperature and flow control, drive means being provided on each cartridge.

9. A thermostatic mixing valve substantially as hereinbefore described with reference to Figures 1 to 5 of the drawings.
